# FASCICULE DE BREVET EUROPEEN

(11) **EP 2 063 240 B1**
(45) Date de publication et mention de la délivrance du brevet: **31.08.2011**
(21) Numéro de dépôt: 08354080.7
(22) Date de dépôt: 28.10.2008
(51) Int. Cl.: G01J 5/02, G01J 5/20

(54) **Détecteur de rayonnement électromagnétique à thermomètre à nanofil et procédé de réalisation**
Detektor mit Nanofadenthermometer für elektromagnetische Strahlung und Umsetzungsverfahren
Electromagnetic radiation detector with nanowire thermometer and manufacturing method

(30) Priorité: 12.11.2007 FR 0707919
(43) Date de publication de la demande: 27.05.2009
(73) Titulaire: Commissariat à l'Énergie Atomique et aux Énergies Alternatives, 75015 Paris (FR)
(72) Inventeur: Gruss, Jean-Antoine, 38170 Seyssinet-Pariset (FR); Ouvrier-Buffet, Jean-Louis, 74320 Sevrier (FR)
(74) Mandataire: Hecké, Gérard

(56) Documents cités:
- EP-A- 1 653 205
- US-A1- 2006 185 710
- US-A1- 2006 266 402

## Description

### Domaine technique de l'invention

L'invention est relative à un détecteur de rayonnement électromagnétique, comportant au moins une membrane d'absorption, apte à absorber les rayonnements électromagnétiques, les transformer en chaleur et transmettre cette chaleur à un thermomètre, ladite membrane étant suspendue au-dessus d'un substrat par au moins un nanofil sensiblement perpendiculaire au substrat.

### État de la technique

Il existe des détecteurs de rayonnement électromagnétique comportant un élément sensible, apte à être chauffé par un rayonnement électromagnétique. L'augmentation de la température de l'élément sensible engendre l'apparition de charges électriques par effet pyroélectrique. Un fonctionnement performant de ce type de détecteur nécessite trois conditions principales au niveau de l'élément sensible : une faible masse calorifique, une bonne isolation thermique de l'élément sensible vis-à-vis de son support et une forte sensibilité de l'effet de conversion de l'échauffement en signal électrique. Ce type de détecteur comporte classiquement un élément sensible, absorbant le rayonnement électromagnétique, suspendu au-dessus d'un substrat de support. Les moyens d'absorption sont fixés au substrat par l'intermédiaire de point d'ancrage.

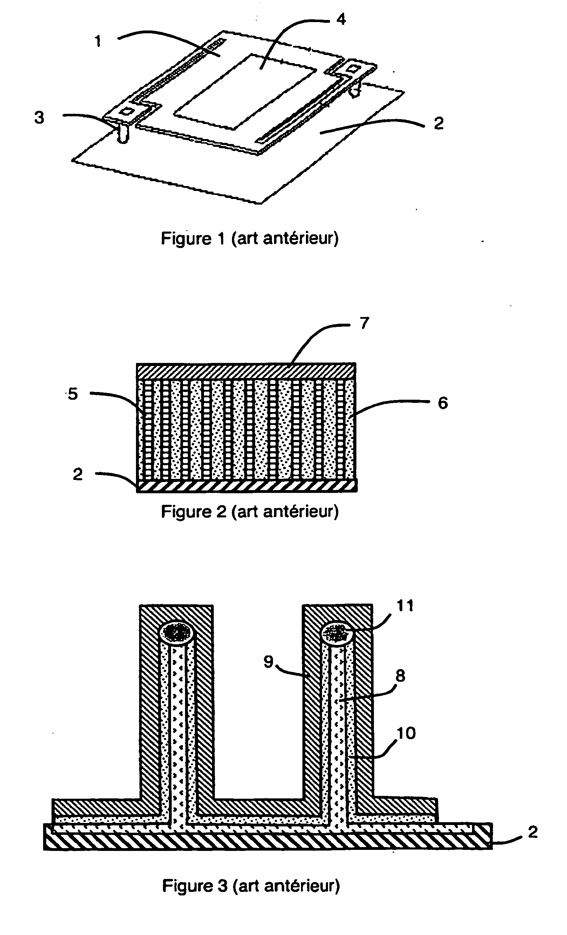

Comme illustré à la figure 1, un détecteur bolométrique comporte classiquement une membrane d'absorption 1, suspendue au-dessus d'un substrat 2 et comportant une couche d'absorption du rayonnement électromagnétique induisant l'échauffement de cette même couche, qui transfère la température ainsi accumulée à un thermomètre 4 en matériau bolométrique. La membrane est suspendue au-dessus du substrat par des piliers 3. L'isolation thermique de la membrane par rapport au substrat 2 est réalisée par l'intermédiaire de bras d'isolement, relativement étroits à l'extrémité desquels sont disposés des piliers 3.

Le document EP-A-1653205 décrit un détecteur bolométrique dans lequel les piliers 3 peuvent être réalisés en nanofils ou nanotubes, pouvant avoir un diamètre de l'ordre de 10Å.

L'article « Fabrication and characterization of a nanowire/Polymer-Based Nanocomposite for a Prototype Thermoelectric Device » publié dans le « Journal of microelectromechanical systems » VOL. 13 No. 3, Juin 2004, p. 505-513, décrit l'utilisation d'un réseau de nanofils en silicium pour former un thermoélément. Comme illustré à la figure 2, ce thermoélément comporte un substrat 2 sur lequel sont réalisés des nanofils 5, dopés p ou n et sensiblement perpendiculaire au substrat 2. Le substrat 2 est un semi-conducteur (par exemple du silicium) dopé de manière complémentaire aux nanofils, c'est-à-dire dopé p si les nanofils sont dopés n et vice versa. Les nanofils 5 sont ensuite noyés dans un polymère 6, de préférence du parylène. Les nanofils 5 sont en contact à la fois, à leur base avec le substrat 2, et à leur extrémité libre avec une couche métallique 7. Pour assurer le contact électrique entre les extrémités des nanofils 5 et la couche métallique 7, la couche en polymère 6 est gravée de manière à laisser apparaître les extrémités des nanofils 5, puis la couche métallique 7 est déposée. Lorsqu'un tel thermoélément est soumis à un gradient de température, la différence de température entre le substrat 2 et la couche métallique 7 génère une tension Seebeck, qui varie de manière connue en fonction du gradient de température. Bien qu'un thermoélément comportant des nanofils 5 en silicium dopé p et un substrat 2 en silicium dopé n présente des propriétés thermo-électriques, ces propriétés peuvent être améliorées par la connexion en série d'au moins deux composants selon la figure 2, comportant alternativement des réseaux de nanofils 5 dopés p et n.

### Objet de l'invention

L'invention a pour but un détecteur de rayonnement électromagnétique, notamment de type bolomètre, présentant de bonnes performances et facile à réaliser.

Ce but est atteint par le détecteur de la revendication 1.

L'invention a également pour objet un procédé de réalisation d'un détecteur comportant successivement :
- la formation au niveau du substrat de plots de connexion électriques,
- le dépôt d'une goutte de catalyseur sur chaque plot,
- le croissance des nanofils à l'emplacement de la goutte de catalyseur,
- le dépôt d'une couche d'isolation électrique sur les nanofils et le substrat,
- le dépôt d'une couche extérieure électriquement conductrice sur les nanofils et le substrat,
- le dépôt d'une résine polymère noyant les nanofils,
- la planarisation de la structure par polissage mécano-chimique,
- la formation d'un élément de connexion électrique entre l'âme et la couche extérieure et le dépôt et la structuration de chaque membrane d'absorption,
- l'enlèvement de la résine polymère par attaque chimique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre, en perspective, un bolomètre selon de l'art antérieur.
Les figures 2 et 3 illustrent, en coupe, deux thermoéléments selon l'art antérieur.
La figure 4 illustre, en coupe, un premier mode de réalisation d'un détecteur selon l'invention.
La figure 5 représente, en coupe, un second mode de réalisation d'un détecteur selon l'invention.
La figure 6 représente une vue de dessus d'un détecteur selon la figure 5.
La figure 7 illustre, en coupe, un autre mode de réalisation selon l'invention
Les figures 8 à 12 illustrent un procédé de réalisation d'un détecteur selon l'invention.
La figure 13 représente le schéma électrique d'un mode particulier de réalisation d'un thermoélément d'un détecteur de l'invention.

### Description de modes particuliers de réalisation

L'invention utilise un thermoélement à base de nanofils du type décrit dans la demande de brevet US n° 11/826293, revendiquant la priorité de la demande de brevet français n°0606617, déposée le 20 juillet 2006, pour constituer le thermomètre du détecteur. Comme illustré à la figure 3 chaque nanofil comporte une âme 8 et une couche extérieure 9 isolées électriquement à leur périphérie par une couche d'isolation électrique 10. L'âme 8 et la couche extérieure 9 sont reliées électriquement à leur extrémité par une goutte 11, de préférence en or, ayant servi de catalyseur pendant l'étape de croissance de l'âme 8. Afin de générer un courant par effet de Seebeck le nanofil est mis en contact avec une zone chaude à une extrémité et avec une zone froide à l'autre extrémité. L'âme 8 et la couche extérieure 9 sont, de préférence, réalisées dans un matériau semi-conducteur respectivement dopé n pour l'un et p pour l'autre ou inversement.

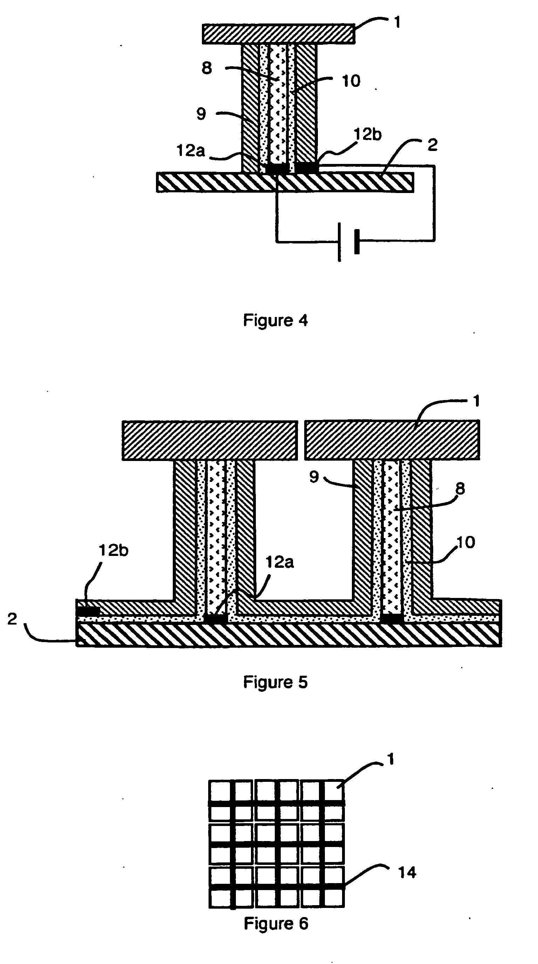

Selon le mode de réalisation illustré à la figure 4, le détecteur de rayonnement électromagnétique comporte au moins une membrane d'absorption 1 du rayonnement et un thermomètre constitué par un seul nanofil associé, qui constitue également un pilier de support central pour la membrane. La membrane d'absorption 1 est suspendue au-dessus du substrat 2 par le nanofil assurant le rôle de thermomètre, en contact thermique avec la membrane 1 et le substrat 2. Le nanofil supportant la membrane 1 est sensiblement perpendiculaire au substrat. Comme sur la figure 3, le nanofil comporte une âme 8 et une couche extérieure 9 isolées électriquement l'une de l'autre à leur périphérie par une couche d'isolation électrique 10. L'âme 8 et la couche extérieure 9 sont réalisées dans des matériaux électriquement conducteurs et sont reliées électriquement entre elles à l'extrémité du nanofil en contact avec la membrane 1. La connexion électrique entre l'âme 8 et la couche extérieure 9 à l'extrémité supérieure du nanofil peut être réalisée par la membrane d'absorption 1, en matériau métallique. Au niveau du substrat, l'âme 8 et la couche extérieure 9 sont, de préférence, respectivement reliées à des plots de connexion 12a et 12b. Par exemple comme illustré à la figure 4, le plot 12a de connexion formé à la base de l'âme 8 est connecté à un pôle positif d'une alimentation, tandis que le plot 12b de connexion, en contact avec la couche extérieure 9 au niveau du substrat est relié à un pôle négatif de l'alimentation.

Sous l'effet du rayonnement électromagnétique, la membrane d'absorption s'échauffe. Le nanofil est en contact, à sa base, avec le substrat 2, porté à une température T1, et à son extrémité supérieure, avec la membrane 1 portée à une température T2 par le rayonnement électromagnétique. Le nanofil est donc soumis à un gradient de température T1 - T2 ce qui génère un courant par effet Seebeck dans le nanofil. Il est ainsi possible de mesurer le courant généré par des moyens de mesures (non représentés) intégrés dans le substrat et d'en déduire l'intensité du rayonnement électromagnétique correspondant.

Dans une variante de réalisation, dans le cas où la membrane n'est pas suffisamment électriquement conductrice, la connexion électrique entre l'âme 8 et la couche extérieure 9 à l'extrémité supérieure du nanofil est réalisée par dépôt d'une couche métallique (non représentée) supportant la couche absorbant le rayonnement électromagnétique. Cette couche métallique peut être en nickel, titane, chrome, cuivre, platine ou tout autre métal électriquement conducteur. La membrane d'absorption 1 ou la couche d'absorption est réalisée en un matériau absorbant le rayonnement électromagnétique considéré. À titre d'exemple dans la bande infrarouge, on peut utiliser du nickel, du titane, du chrome, etc. La membrane d'absorption 1 peut être réalisée dans le même matériau que celui utilisé pour la connexion entre l'âme 8 et la couche extérieure 9 du nanofil.

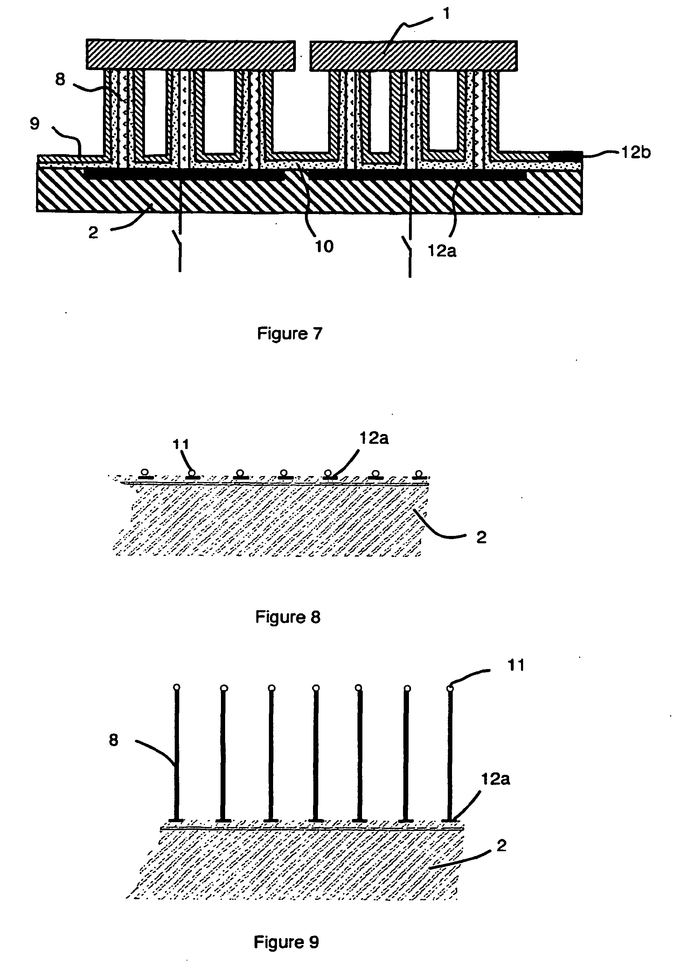

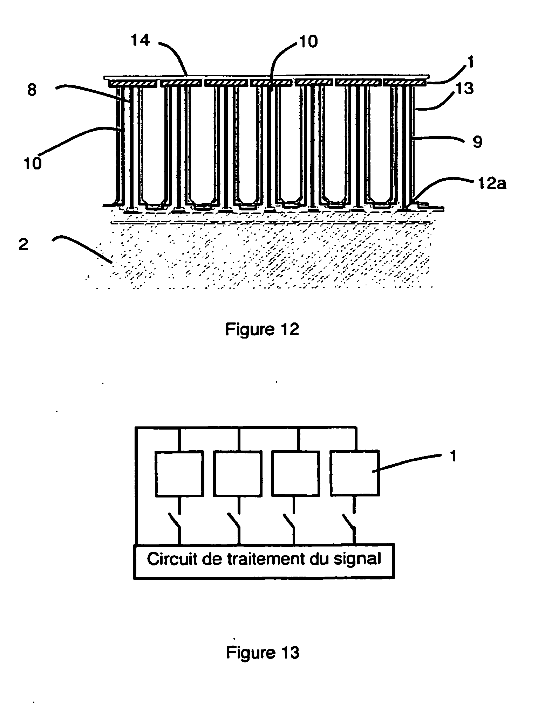

Selon un autre mode de réalisation illustré aux figures 5 à 7, un détecteur comporte, de préférence, plusieurs membranes d'absorption élémentaires 1, constituant chacune un pixel de mesure et disposées classiquement sous forme de matrice. Chaque membrane élémentaire est associée à au moins un nanofil constituant le thermoélément. La connexion électrique des membranes d'absorption 1 élémentaires adjacentes est illustrée à la figure 13 : chaque membrane est indépendante et fournit son propre signal. Afin d'améliorer l'intensité du signal fourni par chaque membrane, la fiabilité et la stabilité mécanique du détecteur, il est avantageux de réaliser plusieurs nanofils par membrane, répartis de manière homogène et reliés électriquement en parallèle. Ainsi comme illustré, par exemple, à la figure 7, chaque membrane peut être supportée par trois nanofils parallèles. Les âmes 8 de ces trois nanofils sont reliées à un même plot de connexion 12a associé à la membrane et intégré dans le substrat 2 de la figure 7. La couche extérieure 9 relie les différentes membranes élémentaires constituant la matrice, à un second plot de connexion 12b commun, associé au détecteur.

Un procédé de réalisation d'un détecteur comportant plusieurs membranes élémentaires supportées chacune par un pilier central constitué par un nanofil et disposées sous forme de barre ou de matrice, est illustré aux figures 8 à 12

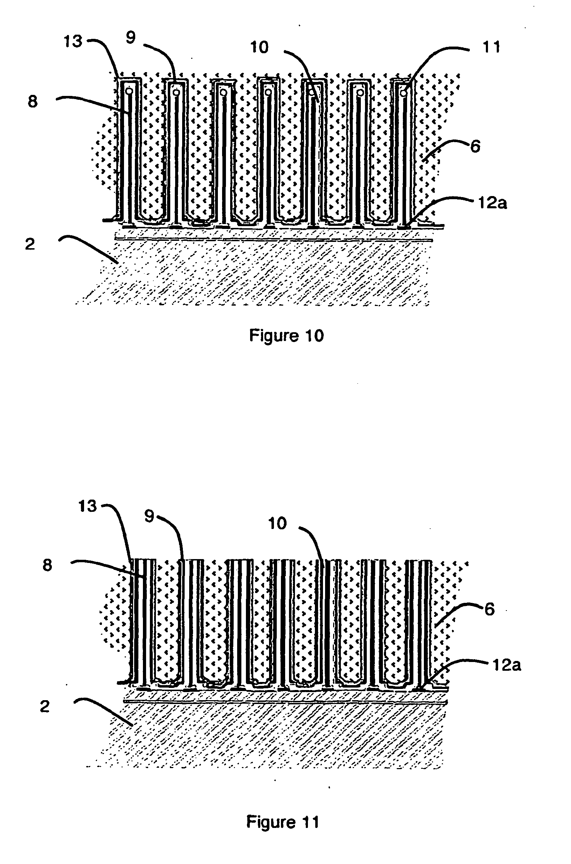

Tout d'abord (figure 8), des plots 12a de connexion sont formés au niveau du substrat 2 (par exemple en silicium ou de type SOI). Puis une goutte de catalyseur 11, de préférence en or, est déposée sur chaque plot 12a de connexion. On réalise ensuite (figure 9) une étape de croissance de l'âme 8 d'une pluralité de nanofils, de préférence en silicium dopé, par la technique Vapeur-Liquide-Solide (VLS). Cette technique est particulièrement bien adaptée à la croissance des semi-conducteurs et des alliages métalliques dès lors que leurs diagrammes de phase sont parfaitement maîtrisés. Des fils de 10 à 50 nm de diamètre peuvent être fabriqués par cette technique. Cette dernière permet également de faire varier la composition à l'intérieur du nanofil en contrôlant la composition de la phase vapeur au niveau de la goutte de catalyseur. Il est possible de réaliser des nanofils de matériaux semi-conducteurs dopés ou non (Si, Ge, gaAs, InP, GaN, etc.) ainsi que des nanofils métalliques. Une couche électriquement isolante est ensuite formée, de préférence par oxydation ou dépôt d'oxyde de silicium. Elle recouvre l'âme 8 de chaque nanofil, constituant ainsi l'isolant 10 des nanofils et recouvrant le substrat 2 entre deux nanofils adjacents (figure 10). La couche extérieure 9, en silicium dopé d'un deuxième type est ensuite déposée, par exemple, par dépôt chimique en phase vapeur (« CVD »). Ensuite l'ensemble des nanofils est noyé dans une résine polymère 6 (figure 10), par exemple en parylène, déposée en phase vapeur ou à la tournette (« spin-coating »). La structure est ensuite planarisée par polissage mécano-chimique (figure 11) afin de laisser apparent l'extrémité supérieure des nanofils. Une couche métallique est ensuite déposée puis structurée afin de réaliser les membranes d'absorption 1 élémentaires, qui constituent également des éléments de connexion électrique entre l'âme 8 et la couche extérieure 9. Enfin, la résine polymère 6 est retirée, par exemple par attaque chimique (figure 12).

Dans une variante, un élément de connexion électrique (non représenté) est réalisé à l'extrémité de chaque nanofils, par dépôt d'un matériau électriquement conducteur après la planarisation par polissage mécano-chimique, afin de relier électriquement l'âme 8 et la couche extérieure 9 de chaque nanofil. Puis une couche est déposée et structurée afin de réaliser les membranes d'absorption 1 élementaires.

Dans le mode de réalisation particulier illustré aux figures 10 à 12, une couche miroir 13, par exemple en aluminium, est déposée sur le substrat 2 et sur les nanofils après dépôt de la couche extérieure 9. Cette couche miroir permet de renvoyer les rayonnements électromagnétiques qui n'ont pas été absorbés par la membrane 1. La couche miroir a, de préférence, une épaisseur de 5nm, mais peut aussi être comprise entre 1 et 100nm. La distance entre la surface supérieure de la couche miroir 13 (au niveau du substrat) et la face inférieure de la membrane 1 est, de préférence, de l'ordre du quart de l'onde du rayonnement électromagnétique à mesurer, afin de réaliser une cavité résonnante maximisant l'absorption. Dans le domaine de l'infrarouge, cette distance sera de l'ordre de 2,5µm. La couche miroir 13 peut être réalisée dans tout matériau ayant un bon coefficient de réflexion du rayonnement électromagnétique considéré. Par exemple, elle pourra être en aluminium dans le cas d'un rayonnement infrarouge.

Dans le mode de réalisation particulier illustré aux figures 6 et 12, après le dépôt et la structuration des membranes d'absorption 1, mais avant le retrait de la résine polymère 6, il est effectué un dépôt d'une couche ou d'une grille de rigidification 14. Cette couche ou grille 14 est réalisée dans un matériau électriquement isolant, par exemple un oxyde de silicium ou du nitrure de silicium, et permet de renforcer mécaniquement la structure formée par les membranes d'absorption 1 élémentaires. L'épaisseur de cette couche ou grille 14 peut être comprise entre 5 et 100nm, de préférence de 10nm.

Chaque membrane d'absorption 1 élémentaire a, de préférence, une épaisseur de 50nm mais pouvant être comprise entre 10 et 300nm. La forme de la membrane sera de préférence carrée, mais pourra aussi être de forme circulaire, triangulaire ou polygonale. La taille typique de la membrane 1 est de 10x10µm, mais peut être comprise entre 0,1 et 100µm en fonction de la longueur d'onde du rayonnement électromagnétique à mesurer et la résolution désirée.

La distance entre les nanofils peut être réglée à la valeur désirée en déposant des gouttes de catalyseur 11 sur le substrat 2 à des endroits déterminés. L'espacement entre deux nanofils est de l'ordre de 10000nm mais peut être compris entre 200 et 50000nm.

Chaque nanofil a, par exemple, une longueur de 2,5 microns. Son âme 8 est réalisée en matériau conducteur, de préférence en silicium dopé d'un premier type (par exemple dopé p), de 15nm de diamètre. La couche d'isolation électrique 10, de préférence en Si0₂ a, par exemple, une épaisseur de 2nm. La couche extérieure 9 de chaque nanofil est en matériau conducteur, de préférence en silicium d'un second type (dopé n) ou en métal, de 3nm d'épaisseur. Le diamètre total du nanofil pourra être compris entre 10 et 100nm.

En supposant que la résistance thermique du nanofil est équivalente à celle d'un nanofil massif de même diamètre, et que la loi de Fourier qui suppose un comportement diffusif des phonons reste applicable, un tel nanofil, de 25nm de diamètre à une conductivité thermique k de l'ordre de 9,5W/m.K, soit une résistance thermique Rth = L/kS.

L étant la longueur du nanofil et S la section de passage du flux de chaleur dans le nanofil, d'environ 540MK/W. Cette résistance thermique est très supérieure à celle obtenue avec les bras de suspension selon l'art antérieur, qui est globalement de l'ordre de 50 à 100 MK/W.

En pratique, cette résistance thermique peut être plus importante. En effet, la couche d'isolant électrique 10, qui intervient pour environ 20% de la section de passage du flux thermique, a une conductivité thermique plus faible, de l'ordre de 1W/m.K que la conductivité thermique retenue ci-dessus. Par ailleurs, la configuration annulaire apporte un effet supplémentaire de diffusion de phonons aux interfaces. De plus, l'âme 8 en silicium dopé peut être réalisée par un empilement axial d'hétéro-jonctions dont la conductivité thermique est réduite d'un facteur 2 à 3. Ce type de nanofil à hétéro-jonction est, par exemple, décrit dans le brevet US6996147. L'augmentation de la longueur du nanofil apporterait une augmentation proportionnelle de la résistance thermique, mais au prix d'un désaccord de la cavité. Par exemple, pour un nanofil de 10 microns de long, la résistance thermique serait multipliée par 4 et atteindrait 2140MK/W.

Suivant la longueur d'onde du rayonnement considéré, le détecteur peut travailler aussi bien dans l'infrarouge proche (longueurs d'ondes de 0,7 à 5 microns) ou moyen (de 5 à 30 microns), dans le visible (longueurs d'ondes comprises entre 400 et 700 nm), que dans l'ultraviolet et en dessous (longueurs d'ondes comprises entre 10 et 400 nm).

Afin d'améliorer l'isolation thermique de la membrane, l'ensemble du détecteur peut être placé sous vide ou sous gaz à très faible pression, derrière une fenêtre transparente au rayonnement considéré.

Le détecteur peut également comporter des moyens de refroidissement afin de diminuer le bruit thermique. Le substrat peut aussi être maintenu à une température déterminée par des éléments à effets Peltier afin d'augmenter la précision et la reproductibilité du détecteur.

Ainsi l'utilisation d'un thermoélément à base de nanofils en tant que thermomètre du détecteur permet de mesurer le rayonnement électromagnétique par l'intermédiaire de l'effet Seebeck. Du fait de la très faible masse des nanofils à leur extrémité, le temps de réponse du thermoélément est réduit et le détecteur est plus sensible. Par ailleurs, le faible diamètre et la hauteur relativement élevée des nanofils permet d'assurer une excellente isolation thermique entre la membrane 1 et le substrat 2. Un autre avantage d'un tel détecteur vient du fait que le détecteur génère lui-même une tension électrique. La consommation électrique du détecteur de rayonnement est donc réduite et seul le circuit électronique d'analyse des données doit être alimenté, ce qui est particulièrement intéressant pour les systèmes devant être autonomes.

## Revendications

1. Détecteur de rayonnement électromagnétique, comportant au moins une membrane d'absorption (1), apte à absorber les rayonnements électromagnétiques, les transformer en chaleur et transmettre cette chaleur à un thermomètre (4), ladite membrane (1) étant suspendue au-dessus d'un substrat (2) par au moins un nanofil sensiblement perpendiculaire au substrat, détecteur **caractérisé en ce que** le thermomètre (4) est constitué par un thermoélément en contact avec la membrane (1) et le substrat (2) et comportant au moins ledit nanofil, chaque nanofil comportant une âme (8) et une couche extérieure (9) isolées électriquement l'une de l'autre à leur périphérie par une couche d'isolation électrique (10), l'âme (8) et la couche extérieure (9) étant reliées électriquement à l'extrémité du nanofil, cette extrémité étant en contact thermique avec la membrane (1).

2. Détecteur selon la revendication 1, **caractérisé en ce que** la membrane (1) est en matériau électriquement conducteur et relie électriquement l'âme (8) et la couche extérieure (9).

3. Détecteur selon les revendications 1 ou 2, **caractérisé en ce que** la membrane (1) est en matériau métallique.

4. Détecteur selon la revendication 1, **caractérisé en ce que** la membrane (1) est constituée par une couche métallique supportant une couche en matériau absorbant les rayonnements électromagnétiques.

5. Détecteur selon l'une quelconque des revendications 1 à 4, **caractérisé en ce que** le nanofil supporte la membrane (1) dans une zone centrale de celle-ci.

6. Détecteur selon l'une quelconque des revendications 1 à 5 **caractérisé en ce que** le thermoélément de la membrane comporte une pluralité de nanofils connectés électriquement en parallèle.

7. Détecteur selon l'une quelconque des revendications 1 à 6, **caractérisé en ce que** le détecteur comporte des moyens pour maintenir le substrat (2) à une température prédéterminée.

8. Détecteur selon l'une des revendications 1 à 7, **caractérisé en ce qu'**une couche miroir (13) est déposée sur le substrat et les nanofils.

9. Détecteur selon la revendication 8, **caractérisé en ce que** la couche miroir (13) est en aluminium.

10. Détecteur selon l'une quelconque des revendications 1 à 9 **caractérisé en ce qu'**il comporte une pluralité de membranes d'absorption (1) élémentaires disposées en matrice, comportant au moins un nanofil associé à chaque membrane d'absorption (1) élémentaire.

11. Procédé de réalisation d'un détecteur selon l'une quelconque des revendication 1 à 9, **caractérisé en ce qu'**il comporte successivement:
- la formation au niveau du substrat (2) de plots (12a) de connexion électriques,
- le dépôt d'une goutte de catalyseur (11) sur chaque plot (12a),
- la croissance des nanofils à l'emplacement de la goutte de catalyseur (11),
- le dépôt d'une couche d'isolation électrique (10) sur les nanofils et le substrat,
- le dépôt d'une couche extérieure (9) électriquement conductrice sur les nanofils et le substrat,
- le dépôt d'une résine polymère (6) noyant les nanofils,
- la planarisation de la structure par polissage mécano-chimique,
- la formation d'un élément de connexion électrique entre l'âme (8) et la couche extérieure (9) et le dépôt et la structuration de chaque membrane d'absorption (1),
- l'enlèvement de la résine polymère (6) par attaque chimique.

12. Procédé de réalisation selon la revendication 11, **caractérisé en ce que** la membrane (1) est électriquement conductrice et forme l'élément de connexion électrique entre l'âme (8) et la couche extérieure (9).

13. Procédé de réalisation selon la revendication 11, **caractérisé en ce que** l'élément est réalisé par le dépôt d'un matériau électriquement conducteur pour relier électriquement l'âme (8) et la couche extérieure (9).

14. Procédé de réalisation selon l'une quelconque des revendications 11 à 13, **caractérisé en ce qu'**il comporte le dépôt d'une couche miroir après le dépôt de la couche extérieure (9) électriquement conductrice et avant le dépôt d'une résine polymère (6) noyant les nanofils.

15. Procédé de réalisation selon l'une quelconque des revendications 11 à 14, **caractérisé en ce qu'**il comporte après le dépôt et la structuration de la membrane d'absorption (1), et avant l'enlèvement de la résine polymère (6), le dépôt d'une couche ou d'une grille de rigidification (14) en matériau électriquement isolant.

## Claims

1. An electromagnetic radiation detector comprising at least one radiation absorption membrane (1) able to absorb electromagnetic radiation, to transform the radiation into heat and to transmit this heat to a thermometer (4), said membrane (1) being suspended above a substrate (2) by at least one nanowire substantially perpendicular to the substrate, a detector **characterized in that** the thermometer (4) is formed by a thermoelement in contact with the membrane (1) and the substrate (2) and comprising at least said nanowire, each nanowire comprising a core (8) and an external layer (9) electrically insulated from one another at their periphery by an electrical insulation layer (10), the core (8) and the external layer (9) being electrically connected to the end of the nanowire, this end being in thermal contact with the membrane (1).

2. The detector according to claim 1, **characterized in that** the membrane (1) is made of electrically conducting material and electrically connects the core (8) and the external layer (9).

3. The detector according to claims 1 or 2, **characterized in that** the membrane (1) is made of metallic material.

4. The detector according to claim 1, **characterized in that** the membrane (1) is formed by a metallic layer supporting a layer of material absorbing electromagnetic radiation.

5. The detector according to any one of claims 1 to 4, **characterized in that** the nanowire supports the membrane (1) in a central area of the membrane.

6. The detector according to any one of claims 1 to 5, **characterized in that** the thermoelement of the membrane comprises a plurality of nanowires electrically connected in parallel.

7. The detector according to any one of claims 1 to 6, **characterized in that** the detector comprises means for keeping the substrate (2) at a preset temperature.

8. The detector according to any one of claims 1 to 7, **characterized in that** a mirror layer (13) is deposited on the substrate and the nanowires.

9. The detector according to claim 8, **characterized in that** the mirror layer (13) is made of aluminum.

10. The detector according to any one of claims 1 to 9, **characterized in that** it comprises a plurality of elementary absorption membranes (1) arranged in a matrix, comprising at least one nanowire associated with each elementary absorption membrane (1).

11. A method for producing a detector according to any one of claims 1 to 9, **characterized in that** it successively comprises:
- formation of electrical connection pads (12a) at the level of the substrate (2),
- deposition of a droplet of catalyst (11) on each connection pad (12a),
- growth of the nanowires at the location of the droplet of catalyst (11),
- deposition of an electrical insulation layer (10) on the nanowires and substrate,
- deposition of an electrically conducting external layer (9) on the nanowires and substrate,
- deposition of a polymer resin (6) embedding the nanowires,
- planarization of the structure by chemical mechanical polishing,
- formation of an electrical connection element between the core (8) and the external layer (9) and deposition and patterning of each absorption membrane (1),
- removal of the polymer resin (6) by chemical etching.

12. The production method according to claim 11, **characterized in that** the membrane (1) is electrically conducting and forms the electrical connection element between the core (8) and the external layer (9).

13. The production method according to claim 11, **characterized in that** the element is achieved by deposition of an electrically conducting material to electrically connect the core (8) and the external layer (9).

14. The production method according to any one of claims 11 to 13, **characterized in that** it comprises deposition of a mirror layer after deposition of the electrically conducting external layer (9) and before deposition of a polymer resin (6) embedding the nanowires.

15. The production method according to any one of claims 11 to 14, **characterized in that**, after deposition and patterning of the absorption membrane (1) and before removal of the polymer resin (6), it comprises deposition of a stiffening layer or grid (14) made from electrically insulating material.

## Patentansprüche

1. Messfühler für elektromagnetische Strahlung, der mindestens eine Absorptionsmembran (1) umfassst, die geeignet ist, die elektromagnetische Strahlung zu absorbieren, sie in Wärme umzuwandeln und diese Wärme an ein Thermometer (4) weiterzuleiten, welche Membran (1) über einem Substrat (2) mittels mindestens eines im Wesentlichen zum Substrat senkrechten Nanodrahts aufgehängt ist, Messfühler, der **dadurch gekennzeichnet ist, dass** das Thermometer (4) von einem Thermoelement gebildet wird, das in Kontakt ist mit der Membran (1) und dem Substrat (2) und mindestens den genannten Nanodraht umfasst, wobei jeder Nanodraht eine Seele (8) und eine äußere Schicht (9) aufweist, die an ihrem Rand voneinander durch eine elektrisch isolierende Schicht (10) elektrisch isoliert sind, wobei die Seele (8) und die äußere Schicht (9) elektrisch an das Ende des Nanodrahts angeschlossen sind, wobei dieses Ende in thermischem Kontakt mit der Membran (1) steht.

2. Messfühler nach Anspruch 1, **dadurch gekennzeichnet, dass** die Membran (1) aus elektrisch leitendem Material besteht und die Seele (8) und die Außenschicht (9) elektrisch miteinander verbindet.

3. Messfühler nach Anspruch 1 oder 2, **dadurch gekennzeichnet, dass** die Membran (1) aus metallischem Material besteht.

4. Messfühler nach Anspruch 1, **dadurch gekennzeichnet, dass** die Membran (1) von einer Metallschicht gebildet wird, die eine Schicht aus einem Material trägt, das elektromagnetische Strahlung absorbiert.

5. Messfühler nach einem der Ansprüche 1 bis 4, **dadurch gekennzeichnet, dass** der Nanodraht die Membran (1) in einem mittleren Bereich derselben trägt.

6. Messfühler nach einem der Ansprüche 1 bis 5, **dadurch gekennzeichnet, dass** das Thermoelement der Membran eine Mehrzahl von Nanodrähten umfasst, die elektrisch parallel geschaltet sind.

7. Messfühler nach einem der Ansprüche 1 bis 6, **dadurch gekennzeichnet, dass** der Messfühler Mittel zum Halten des Substrats (2) auf einer vorbestimmten Temperatur umfasst.

8. Messfühler nach einem der Ansprüche 1 bis 7, **dadurch gekennzeichnet, dass** eine Spiegelschicht (13) auf das Substrat und die Nanodrähte aufgebracht ist.

9. Messfühler nach Anspruch 8, **dadurch gekennzeichnet, dass** die Spiegelschicht (13) aus Aluminium besteht.

10. Messfühler nach einem der Ansprüche 1 bis 9, **dadurch gekennzeichnet, dass** er eine Mehrzahl einzelner Absorptionsmembranen (1) umfasst, die als Matrix angeordnet sind, die mindestens einen Nanodraht umfasst, der mit jeder einzelnen Absorptionsmembran (1) verbunden ist.

11. Verfahren zur Herstellung eines Messfühlers nach einem der Ansprüche 1 bis 9, **dadurch gekennzeichnet, dass** es nacheinander umfasst:
- die Herstellung von Bumps (12a) auf dem Substrat (2) zur elektrischen Verbindung,
- das Aufbringen eines Tropfens eines Katalysators (11) auf jeden Bump (12a),
- das Aufziehen der Nanodrähte an der Stelle des Katalysatortropfens (11),
- das Aufbringen einer elektrisch isolierenden Schicht (10) auf die Nanodrähte und das Substrat,
- das Aufbringen einer elektrisch leitenden äußeren Schicht (9) auf die Nanodrähte und das Substrat,
- das Aufbringen eines Polymerharzes (6) zum Einbetten der Nanodrähte,
- Planarisieren des Aufbaus durch mechanisch-chemisches Glätten,
- Herstellen eines Elements zur elektrischen Verbindung zwischen der Seele (8) und der äußeren Schicht (9) und Aufbringen und Strukturierung jeder Absorptionsmembran (1),
- Entfernen des Polymerharzes (6) durch Ätzen.

12. Herstellungsverfahren nach Anspruch 11, **dadurch gekennzeichnet, dass** die Membran (1) elektrisch leitend ist und das elektrische Verbindungselement zwischen der Seele (8) und der äußeren Schicht (9) bildet.

13. Herstellungsverfahren nach Anspruch 11, **dadurch gekennzeichnet, dass** das Element durch Aufbringen eines elektrisch leitenden Materials zur elektrischen Verbindung der Seele (8) mit der äußeren Schicht (9) hergestellt wird.

14. Herstellungsverfahren nach einem der Ansprüche 11 bis 13, **dadurch gekennzeichnet, dass** es das Aufbringen einer Spiegelschicht nach dem Aufbringen der elektrisch leitenden äußeren Schicht (9) und vor dem Aufbringen eines Polymerharzes (6) zum Einbetten der Nanodrähte umfasst.

15. Herstellungsverfahren nach einem der Ansprüche 11 bis 14, **dadurch gekennzeichnet, dass** es nach dem Aufbringen und der Strukturierung der Absorptionsmembran (1) und vor dem Entfernen des Polymerharzes (6) das Aufbringen einer Versteifungsschicht oder eines Versteifungsgitters (14) aus elektrisch isolierendem Material umfasst.
